# EUROPÄISCHE PATENTSCHRIFT

(11) **EP 1 362 204 B1**
(45) Veröffentlichungstag und Bekanntmachung des Hinweises auf die Patenterteilung: **19.01.2005**
(21) Anmeldenummer: 02714119.1
(22) Anmeldetag: 26.01.2002
(51) Int. Cl.: F16L 55/04, F16L 55/045

(54) **LEITUNGSANORDNUNG**
SYSTEM OF LINES
SYSTEME DE CONDUITES

(30) Priorität: 20.02.2001 DE 10107872
(43) Veröffentlichungstag der Anmeldung: 19.11.2003
(73) Patentinhaber: DaimlerChrysler AG, 70567 Stuttgart (DE)
(72) Erfinder: EHMANN, Werner, 70469 Stuttgart (DE); KIESERLING, Joachim, 71334 Waiblingen (DE); SCHEYHING, Frank, 71106 Magstadt (DE); SURGER, Martin, 73527 Schwäbisch Gmünd (DE)
(86) Internationale Anmeldenummer: PCT/EP2002/000824
(87) Internationale Veröffentlichungsnummer: WO 2002/066882

(56) Entgegenhaltungen:
- DE-A- 3 510 267
- US-A- 3 215 164
- US-A- 3 323 305
- US-A- 5 185 002
- US-A- 5 791 141
- US-A- 6 073 656
- PATENT ABSTRACTS OF JAPAN vol. 1997, no. 07, 31. Juli 1997 (1997-07-31) & JP 09 079474 A (HITACHI CONSTR MACH CO LTD), 25. März 1997 (1997-03-25)
- PATENT ABSTRACTS OF JAPAN vol. 2000, no. 01, 31. Januar 2000 (2000-01-31) & JP 11 294679 A (MITSUBISHI HEAVY IND LTD), 29. Oktober 1999 (1999-10-29)

## Beschreibung

Die Erfindung betrifft eine Leitungsanordnung zur Übertragung von Volumenströmen flüssiger Medien mit einem einer Pumpe zugeordneten Anschluss, einem einem Verbraucher zugeordneten Anschluss sowie einer die Pumpe mit dem Verbraucher verbindenden Verbindungsleitung.

Bei derartigen Hydraulikleitungen können Druckpulsationen entstehen, die Resonanzen in den Leitungen anregen, welche nicht nur Ursache für störende Geräusche, sondern auch für eine Lockerung von Schraubverbindungen und/oder Verschleiß sein können.

Zur Vermeidung dieser Schwierigkeiten ist es bekannt, an die von flüssigen Medien durchströmten Leitungen ein oder mehrere Druckspeicher anzuschließen, welche in ihrem Volumen und in ihrem Vorspannungsdruck so ausgelegt sind, dass sie die auftretenden Druckschwankungen möglichst weitgehend dämpfen. Nachteilig an diesen Druckspeichern ist jedoch, dass sie ein großes Volumen aufweisen und damit ein hohes Gewicht haben, was bei manchen Einsatzbereichen von Leitungsanordnungen aufgrund der schlechten Anpassbarkeit zu Problemen führt. Hinzu kommt, dass diese bekannten Lösungen relativ teuer und schwer auf den jeweiligen Einsatzfall auszulegen bzw. einzustellen sind.

Die JP-A-11 294679 zeigt in Figur 9 eine weitere Leitungsanordnung zur Minderung von Druckpulsationen gasförmiger Medium.

Des weiteren ist es beispielsweise aus der DE 35 10 267 A1 bekannt, zur Vermeidung von Druckpulsationen in Leitungen einen Zuleitungsschlauch - d.h. einen durchflossenen Schlauch, der zwischen Pumpe und Verbraucher angeordnet ist - vorzusehen, der ein äußeres biegsames Schlauchteil und ein inneres biegsames Schlauchteil, welches koaxial im äußeren Schlauchteil anordnet ist und sich nur über einen Teilbereich des äußeren Schlauchteils erstreckt, vorzusehen. Das innere Schlauchteil ist mit seinem einen Ende mit einem Anschlussstück des äußeren Schlauchteils verbunden und bildet mit dem äußeren Schlauchteil einen langgestreckten, ringförmigen Raum. Da sich das innere Schlauchteil nicht über die gesamte Länge des äußeren Schlauchteils erstreckt, entsteht im Anschluss an den langgestreckten, ringförmigen Raum eine Leerkammer. Das ist ein Bereich, in dem die Flüssigkeit nur von dem äußeren Schlauchteil umgeben ist. Bei dieser Schlauchanordnung durchfließt das flüssige Medium erst den inneren Schlauchteil, bevor es in die Leerkammer strömt. Das innere Schlauchteil ist also mit seinem freien Ende Richtung Verbraucher, mit anderen Worten in Strömungsrichtung, ausgerichtet.

Das bekannte Dämpfungselement wirkt folgendermaßen: Druckpulsationen laufen in der beschriebenen Schlauchanordnung über das innere Schlauchteil zunächst in die Leerkammer. Ein Teil der wandernden Pulsationswellen wird sich in der Leerkammer in stromabwärtiger Richtung fortpflanzen, während ein anderer Teil sich in stromaufwärtiger Richtung im langgestreckten ringförmigen Raum zwischen innerem und äußerem Schlauchteil fortpflanzen wird. Die stromaufwärts gerichteten Wellen werden an der inneren Stirnwand des Anschlussstücks umgelenkt, um im ringförmigen Hohlraum wieder stromabwärts zu wandern und sich mit den vom inneren Schlauchteil austretenden wandernden Pulsationswellen zu überlagern. Bei diesem Überlagerungsvorgang überlagern sich die Wellen teilweise gegenphasig, wodurch eine dämpfende Wirtung erzielt wird.

Bei einigen Hydrauliksystemen, insbesondere bei Kolbenpumpen, reicht die Dämpfungswirkung der beschriebenen Leitungsanordnung nicht aus, um die hohe Pulsations- und damit die Geräuschabstrahlung der Pumpe ausreichend zu dämpfen.

Vor diesem Hintergrund liegt der vorliegenden Erfindung die Aufgabe zugrunde, eine Leitungsanordnung zur Übertragung von Volumenströmen der eingangs genannten Art zu schaffen, bei der die Dämpfungswirkung verstärkt ist.

Diese Aufgabe wird durch die Merkmale des Anspruchs 1 gelöst.

Demnach zeichnet sich die erfindungsgemäße Lösung dadurch aus, dass in der Leitungsanordnung mindestens eine nicht durchströmte Leitung vorgesehen ist, die von einer Verbindungsleitung zwischen Pumpe und Verbraucher abzweigt. Diese nicht durchströmte Leitung besteht zumindest teilweise aus einem elastischen Schlauch und ist an ihrem der Abzweigung abgewandten Ende verschlossen. Die nicht durchströmte Leitung kann aufgrund der Nachgiebigkeit der Schlauchwand bei erhöhten Drücken ein größeres Volumen ersetzen und dadurch Druckpulsationen ausgleichen. Wird ein solcher nicht durchströmter, nachgiebiger Schlauch an eine beschriebene Schlauchanordnung angeschlossen, so wirkt sich die beschriebene Dämpfungswirkung Weise auf die gesamte Leitungsanordnung aus. Es wird durch die erfindungsgemäße Anordnung eine erhebliche Dämpfung der Pulsationen erreicht, was sich insbesondere durch drastisch niedrigere Geräuschemissionen der Pumpe zeigt.

Der elastische Schlauch kann sich über die gesamte Länge der nicht durchströmten Leitung erstrecken. Er kann sich aber auch nur über einen Teil dieser Leitung erstrecken, wobei der andere Teil beispielsweise aus einem Metallrohr besteht.

Gemäß einer Ausführungsform zweigt die nichtdurchströmte Leitung direkt an dem der Pumpe zugeordneten Anschluss der Verbindungsleitung ab. In diesem Fall ergeben sich besonders gute Dämpfungsgrade. Die Verzweigung kann aber auch in jedem anderen Bereich der Verbindungsleitung erfolgen.

In dem als nicht durchflossene Leitung angeordneten elastischen Schlauch ist mindestens ein innerer Schlauch kleineren Durchmessers vorgesehen, der in dem äußeren Schlauch koaxial ausgerichtet ist. Dieser kann mit seinem einen Ende an dem äußeren elastischen Schlauch befestigt sein. Die Verbindung von äußerem und innerem Schlauch kann beispielsweise über eine zwischen äußerem und innerem Schlauch angeordnete, mit einem Ende des inneren Schlauchs verbundene Muffe, die mit einer um den äußeren Schlauch angeordnete hülsenförmige Klemme gehalten wird erfolgen. Die Verbindung kann jedoch auch auf jede andere dem Fachmann geläufige Art und Weise erfolgen.

Das freie, nicht mit der Muffe verbundene Ende des inneren Schlauchs ist in Richtung der Pumpe ausgerichtet. Die Muffe kann auch in der Mitte des inneren Schlauchs angeordnet sein, so dass dieser zwei freie Enden aufweist, von denen eines in Richtung Pumpe und ein weiteres in die entgegengesetzte Richtung weist.

Die Kombination von zusätzlich nicht durchflossener Leitung und einer durch zusätzlich innere Schläuche erzielte Unterbrechung der Fluidsäule in der Leitungsanordnung kann die Geräuschemissionen über weite Drehzahlbereiche der Pumpe erheblich gemindert werden.

Es können auch mehrere innere Schläuche in dem äußeren elastischen Schlauch angeordnet sein. Diese können alle in die gleiche Richtung weisen oder auch in unterschiedliche. Auch die Länge der inneren Schläuche kann variieren. Über die zuletzt genannten Varianten kann der Dämpfungsgrad der erfindungsgemäßen Leitungsanordnung ganz genau auf den jeweiligen Anwendungsfall eingestellt werden.

Es ist auch denkbar zusätzlich zu der nicht durchflossenen Leitung einen Teil der Verbindungsleitung zwischen Pumpe und Verbraucher aus einem elastischen Schlauch auszuführen. Auch in diesem Schlauch können innere Schläuche kleineren Durchmessers in den oben aufgeführten Variationen vorgesehen sein.

Im folgenden wird die Erfindung anhand des in der Zeichnung dargestellten Ausführungsbeispiels näher erläutert. Es zeigen:
- Fig. 1:: eine perspektivische Darstellung der erfindungsgemäßen Leitungsanordnung mit einem nicht durchströmten Leitungsabschnitt und
- Fig. 2:: eine Schnittdarstellung des nicht durchströmten Leitungsabschnitts gemäß Fig. 1.

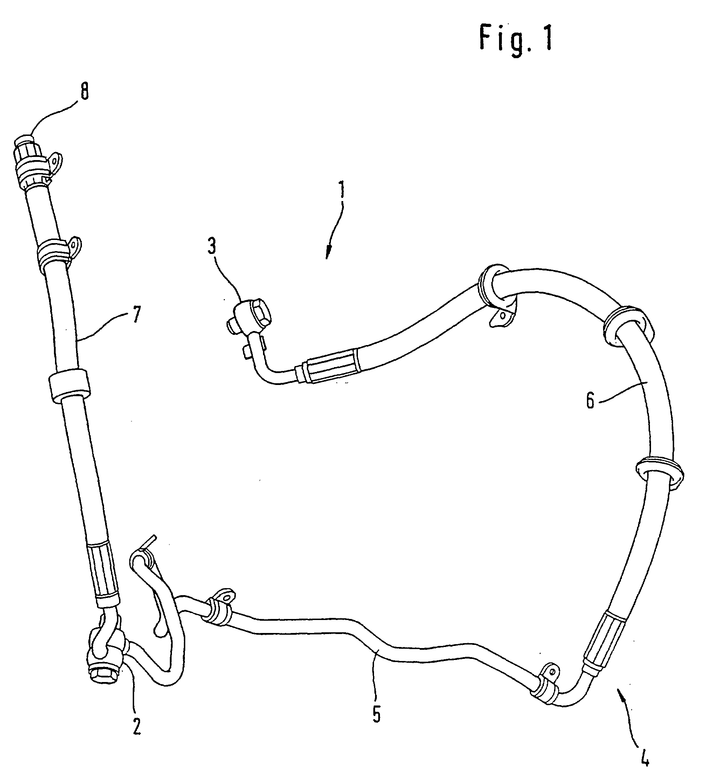

In Fig. 1 ist eine erfindungsgemäße Leitungsanordnung 1 für die Hydraulikanlage eines aktiven Fahrwerks dargestellt. Die erfindungsgemäße Lösung kann aber auch bei jedem anderen denkbaren Hydrauliksystem Anwendung finden, bei der durch Übertragung von Druck- und Volumenströmen Pulsationen auftreten, wie beispielsweise bei einem Servolenkungs-System. Bei 2 ist die Leitungsanordnung 1 mit einer nicht dargestellten Pumpe verbunden. Bei 3 ist die Leitungsanordnung 1 mit einem ebenfalls nicht dargestellten Verbraucher verbunden. Zwischen den Anschlüssen 2 und 3 ist eine Verbindungsleitung 4 vorgesehen, die die Pumpe mit dem Verbraucher verbindet. Die Verbindungsleitung 4 besteht zu einem Teil aus einem Metallrohr 5 und zu einem weiteren Teil aus einem nachgiebigen Schlauch 6, der aus einem aus dem Stand der Technik bekannten textil- oder metallverstärkten Schlauch gebildet wird.

An dem Anschluss 2 zweigt eine weitere Leitung 7 ab. Diese Leitung 7 ist nicht durchflossen. Es handelt sich bei der Leitung 7 um eine Stichleitung, die an ihrem der Abzweigung 2 abgewandten Ende 8 verschlossen ist. Die Stichleitung besteht ebenfalls aus einem elastischen, textil- oder metallverstärkten Schlauch. Die Abzweigung zur Stichleitung kann je nach Anwendung an jedem beliebigen anderen Ort der durchflossenen Verbindungsleitung 4 zwischen Pumpe und Verbraucher erfolgen.

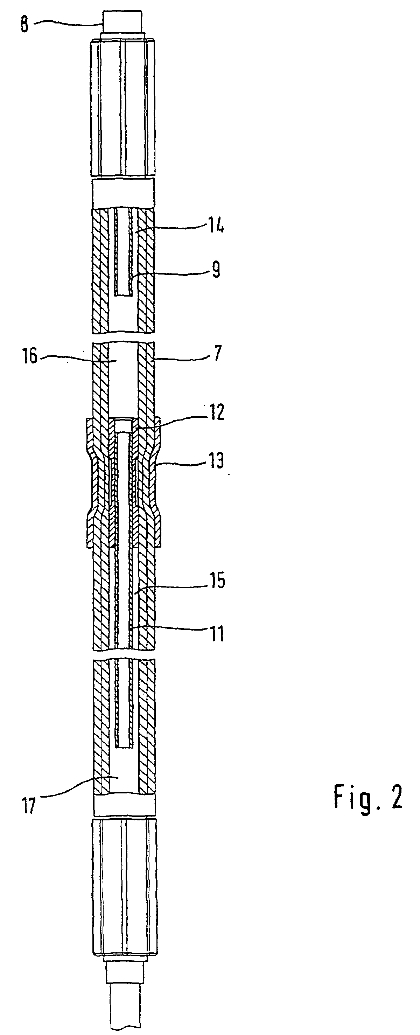

In Fig. 2 ist die Stichleitung 7 im Schnitt dargestellt. An dem in der Darstellung nach oben weisenden Ende 8 ist die Stichleitung 8 verschlossen. An dem nach unten weisenden Ende führt die Leitung zu dem Anschluss 2 mit der Pumpe.

In der Stichleitung 7 sind zwei innere Schläuche 9 und 11 angeordnet. Diese beiden Schläuche haben einen geringeren Durchmesser als der äußere Schlauch der Stichleitung 7 und sind koaxial in diesem angeordnet. Der Schlauch 9 ist über die das Schlauchende 8 abschließende Anordnung mit dem äußeren Schlauch 7 verbunden. Bei dem in der Mitte des äußeren Schlauchs 7 angeordneten inneren Schlauch 11 erfolgt die Verbindung über eine mit dem inneren Schlauch 11 verbundene in dem äußeren Schlauch 7 angeordnete Muffe 12. Der Außendurchmesser der Muffe 12 ist zumindest in Teilbereichen auf den Innendurchmesser des äußeren Schlauchs 7 abgestimmt. Damit die Muffe 12 in dem äußeren Schlauch 7 nicht verrutscht, ist außerhalb des äußeren Schlauchs 7, auf Höhe der Muffe 12 eine muffenförmige Klemme 13 vorgesehen.

Die beiden inneren Schläuche 9 und 11 erstrecken sich nur über einen Teilbereich der äußeren Stichleitung 7. Sie weisen mit ihren freien Enden in Richtung Pumpe. Sie können auch von der Pumpe wegweisen. Das ist in den Figuren jedoch nicht dargestellt. Sie bilden mit der Stichleitung 7 jeweils einen ringförmigen Raum 14 und 15. Vor den freien Enden der inneren Schläuche 9 und 11 entsteht jeweils eine Leerkammer 16 bzw. 17.

Durch die inneren Schläuche 9 und 11 wird die Fluidsäule in der Todleitung 7 unterbrochen. Diese Unterbrechung führt dazu, dass Pulsationswellen in der Fluidsäule geteilt werden, daraufhin unterschiedliche Wege zurücklegen, teilweise reflektiert werden und wieder zusammentreffen. Bei dem Zusammentreffen überlagern sich die Pulsationswellen gegenphasig und werden dadurch gedämpft.

Über die inneren Schläuche 9 und 11, insbesondere über deren Anzahl, Anordnung in der Leitung 7, Ausrichtung in der Leitung sowie Länge, kann jedes Gesamtsystem ganz genau abgestimmt und eingestellt werden. Den Schläuchen 9 und 11 entsprechende Schläuchen können auch in dem nachgiebigen Schlauch 6 der Verbindungsleitung 4 vorgesehen sein.

## Patentansprüche

1. Leitungsanordnung (1) zur Übertragung von Volumenströmen flüssiger Medien mit
- einem einer Pumpe zugeordneten Anschluss (2),
- einem einem Verbraucher zugeordneten Anschluss (3) sowie
- einer die Pumpe mit dem Verbraucher verbindenden Verbindungsleitung (4), wobei
- von der Verbindungsleitung (4) mindestens eine nicht durchströmte Leitung (7) abzweigt, die zumindest teilweise aus einem elastischen Schlauch besteht,
wobei in dem elastischen Schlauch der nicht durchströmten Leitung (7) mindestens ein innerer Schlauch (9, 11) kleineren Durchmessers angeordnet ist, der koaxial zu der nicht durchströmten Leitung (7) ausgerichtet ist, und der innere Schlauch (9, 11) mindestens ein freies Ende aufweist, welches in Richtung Pumpe weist.

2. Leitungsanordnung nach Anspruch 1,
**dadurch gekennzeichnet,**
**dass** die nicht durchströmte Leitung (7) direkt an dem der Pumpe zugeordneten Anschluss (2) abzweigt.

3. Leitungsanordnung nach Anspruch 1 oder 2,
**dadurch gekennzeichnet,**
**dass** in dem äußeren elastischen Schlauch der nicht durchströmten Leitung (7) mehrere innere Schläuche (9, 11) unterschiedlicher Länge angeordnet sind.

## Claims

1. A pipe arrangement (1) for transmitting volume flows of liquid media having
- a connection (2) assigned to a pump,
- a connection (3) assigned to a consumer and
- a connecting line (4) connecting the pump to the consumer,
- there being at least one pipe (7) through which no liquid media flow and which consists in part at least of an elastic hose branching off the connecting line (4),
there being positioned in the elastic hose of the pipe through which no liquid media pass at least one inner hose (9, 11) of smaller diameter which is oriented coaxially in relation to the pipe (7) through which no liquid media pass, and the inner hose (9, 11) having at least one free end which points towards the pump.

2. A pipe arrangement in accordance with claim 1,
**characterised in that**
the pipe (7) through which no liquid media pass branches directly off the connection (2) assigned to the pump.

3. A pipe arrangement process in accordance with claim 1 or 2,
**characterised in that**
several inner hoses (9, 11) of different length are positioned in the outer elastic hose of the pipe (7) through which no liquid media pass.

## Revendications

1. Système de conduites (1) pour la transmission de débits ou d'écoulements volumiques de milieux liquides comprenant,
- un raccord de branchement (2) associé à une pompe,
- un raccord de branchement (3) associé à un récepteur,
- ainsi qu'une conduite de liaison (4) reliant la pompe au récepteur,
- au moins une conduite (7) non traversée par l'écoulement étant dérivée de la conduite de liaison (4) et étant constituée au moins partiellement par un tuyau élastique,
système de conduites pour lequel dans le tuyau élastique de la conduite (7) non traversée par l'écoulement est disposé au moins un tuyau intérieur (9, 11) de diamètre moindre, qui est orienté coaxialement à la conduite (7) non traversée par l'écoulement, et le tuyau intérieur (9, 11) présentant au moins une extrémité libre qui est dirigée en direction de la pompe.

2. Système de conduites selon la revendication 1, **caractérisé en ce que** la conduite (7) non traversée par l'écoulement est dérivée directement au niveau du raccord de branchement (2) associé à la pompe.

3. Système de conduites selon la revendication 1 ou 2, **caractérisé en ce que** dans le tuyau élastique extérieur de la conduite (7) non traversée par l'écoulement, sont disposés plusieurs tuyaux intérieurs (9, 11) de longueur différente.
